# EUROPEAN PATENT APPLICATION

(11) **EP 3 346 437 A1**
(43) Date of publication of application: **11.07.2018**
(21) Application number: 17150863.3
(22) Date of filing: 10.01.2017
(51) Int. Cl.: G06Q 20/40, G06Q 10/10

(54) **METHOD OF MAPPING INTERACTIONS BETWEEN ENTITIES**

(71) Applicant: Mastercard International Incorporated, Purchase NY 10577 (US)
(72) Inventor: McBennett, Pat, Dublin, 18 (IE)
(74) Representative: Lawrence, Richard Anthony

(57) **Abstract**

According to an aspect of the present disclosure there is provided a method for mapping and handling interactions between a plurality of entities in a network. The method comprises calculating an initial trust value between pairs of entities based on all previous interactions between those entities, the trust value indicating the degree of trust associated with the interaction. The method also comprises determining, for each entity in the network in turn, one or more pair-wise relationships between a selected entity and any of the other entities in the network with which the selected entity has interacted; and generating a graphical representation of all of the entities in the network based on the relationships determined for each pair of entities, and the calculated trust value associated with the interaction between each pair of entities. The method also comprises iteratively propagating, using a graphical mapping algorithm, the initial trust values to all entities in the graphical representation so as to calculate a current trust value associated with each entity; and analysing the calculated current trust values for each entity to determine an appropriate action to be taken in dependence on the results of the analysis.

## Description

### TECHNICAL FIELD

The present disclosure relates to a method of mapping interactions between entities in a network, particularly but not exclusively to a method for mapping interactions between entities in a payment network. Aspects of the disclosure relate to a system for carrying out the afore-mentioned mapping method and taking action in response to a result obtained from the mapping method.

### BACKGROUND

Transaction fraud (particularly credit card fraud) relates to theft and fraud committed using or involving a payment card (for example, a credit or debit card) as a fraudulent source of funds, although with an ever-increasing number of 'card-not-present' transactions being carried out, fraudsters are also finding method of committing fraud without requiring the physical presence of the payment card. Instances of transaction fraud, whilst perhaps not occurring as frequently as other types of fraud (for example, identity fraud) nevertheless can result in huge financial losses, particularly for the card issuers who feel the cumulative effects of fraudulent activity committed using all of their issued payment cards. This is also exacerbated by the fact that stolen information from the cards can be hoarded for long periods of time without being used and therefore it can be difficult to identify the source of the compromise. For example, a particular merchant's POS (Point-Of-Sale) terminal may have been compromised and used to skim credit cards, however this can be hard for the card issuer to determine, as individual fraudulent transactions may not be large enough to raise suspicions.

Systems and methods for detecting and guarding against transaction fraud do exist. For example, some fraud detection systems attempt to carry out real-time detection of fraudulent activity with a view to preventing the activity from occurring as far as possible. Other systems attempt to detect and identify 'fraud rings', which comprise groups of individuals collaborating with one another to commit fraud on a large scale. However, such systems need constant updating as fraudsters continually find new ways to circumvent the latest security measures.

It is against this background, and to mitigate or overcome at least some of the above-mentioned problems, that the present disclosure has been devised.

### SUMMARY OF THE DISCLOSURE

According to an aspect of the disclosure, there is provided a method for mapping and handling interactions between a plurality of entities in a network. The method comprises calculating an initial trust value between pairs of entities based on all previous interactions between those entities, the trust value indicating the degree of trust associated with the interaction; and determining, for each entity in the network in turn, one or more pair-wise relationships between a selected entity and any of the other entities in the network with which the selected entity has interacted. The method also comprises generating a graphical representation of all of the entities in the network based on the relationships determined for each pair of entities, and the calculated trust value associated with the interaction between each pair of entities; iteratively propagating, using a graphical mapping algorithm, the initial trust values to all entities in the graphical representation so as to calculate a current trust value associated with each entity; and analysing the calculated current trust values for each entity to determine an appropriate action to be taken in dependence on the results of the analysis.

Advantageously, graphically representing relationships between network entities allows the interactions between all entities across the network to be easily understood and analysed, so that action can be taken to address any issues that may be observed to arise within the network.

Optionally, the method may further comprise re-calculating, in response to a pre-determined trigger condition, the initial trust value for each interaction using an iterative method; and updating the graphical representation and the current trust values based on the re-calculated initial trust values. Optionally, the pre-determined trigger condition corresponds to a pre-defined interval of time.

Advantageously, this provides the ability to refresh and update the graphical representation to take into account the fact that interactions change over time, and to ensure that the graphical representation accurately reflects the current status of the network and its entities.

Optionally, the method further comprises identifying, via the analysis of the current trust values, the occurrence of a specific event, and taking action in dependence on the event occurrence. This enables a user to identify that an event affecting certain entities has occurred and to determine (either automatically or by a user analysis) the appropriate action that can be taken (for example to mitigate any detrimental effects of the event).

Optionally, the event is an instance of fraudulent activity, and the initial trust value is a measure of the probability of fraud for interactions between the corresponding pair of entities. The network may correspond to a transaction network and the initial trust value may correspond to a measure of the probability of an interaction between a pair of entities being fraudulent.

Advantageously, the application of the above-described method to transaction networks ensures that any instances of fraud can be pinpointed accurately, and traced back to their source. The use of a graphical representation of all the interactions and connections between entities in a transaction network also helps to ensure that such interactions and connections can be accurately mapped at any given time. This allows the appropriate actions to be taken once the source of the fraudulent activity has been identified (for example, notifying the correct affected entities).

Optionally, the initial trust value is only calculated between pairs of entities which carry out direct transaction interactions. Optionally, each of the entities is one of the following: issuer, acquirer, merchant, card holder, card.

According to another aspect of the present disclosure, there is provided a computer program product comprising instructions which when the program is executed by a computer, cause the computer to carry out the steps of the above-described methods. According to another aspect of the present disclosure, there is provided a computer-readable storage medium comprising instructions which, when executed by a computer, cause the computer to carry out the steps of the above-described methods.

According to another aspect of the present disclosure, there is provided a system for mapping and handling interactions between a plurality of entities in a network. The system comprises a computation module arranged to calculate an initial trust value between pairs of entities based on all previous interactions between those entities, the trust value indicating the degree of trust associated with the interaction; a determining module arranged to determine for each entity in the network in turn, one or more pair-wise relationships between a selected entity and any of the other entities in the network with which the selected entity has interacted; a generator module arranged to generate a graphical representation of all of the entities in the network based on the relationships determined for each pair of entities, and the calculated trust value associated with the interaction between each pair of entities; a propagator module arranged to iteratively propagating, using a graphical mapping algorithm, the initial trust values to all entities in the graphical representation so as to calculate a current trust value associated with each entity; and an analysis module arranged to analyse the calculated current trust values for each entity to determine an appropriate action to be taken in dependence on the results of the analysis.

### BRIEF DESCRIPTION OF THE DRAWINGS

The disclosure will now be described in detail by way of example only, with reference to the drawings, in which:
**Figure 1** illustrates a typical four-party model used in payment interactions between entities operating in a card scheme;
**Figure 2** shows a schematic illustration of a transaction network in which an aspect of the present disclosure may be implemented;
**Figure 3** is a flow diagram illustrating a general method by which a graphical representation of entities, in the transaction network of Figure 2, may be generated and updated in accordance with an aspect of the present disclosure;
**Figure 4** illustrates an example of an initial graphical representation generated using the initialising phase of the method of Figure 3; and
**Figure 5** illustrates an example form of the final graphical representation of Figure 4 that has had a FraudRank score applied to every node of the graph according to the method of Figure 3.

Where the figures laid out herein illustrate embodiments of the present disclosure, these should not be construed as limiting to the scope of the disclosure. Where appropriate, like reference numerals will be used in different figures to relate to the same structural features of the illustrated embodiments.

### DETAILED DESCRIPTION

Specific embodiments are described below with reference to the figures.

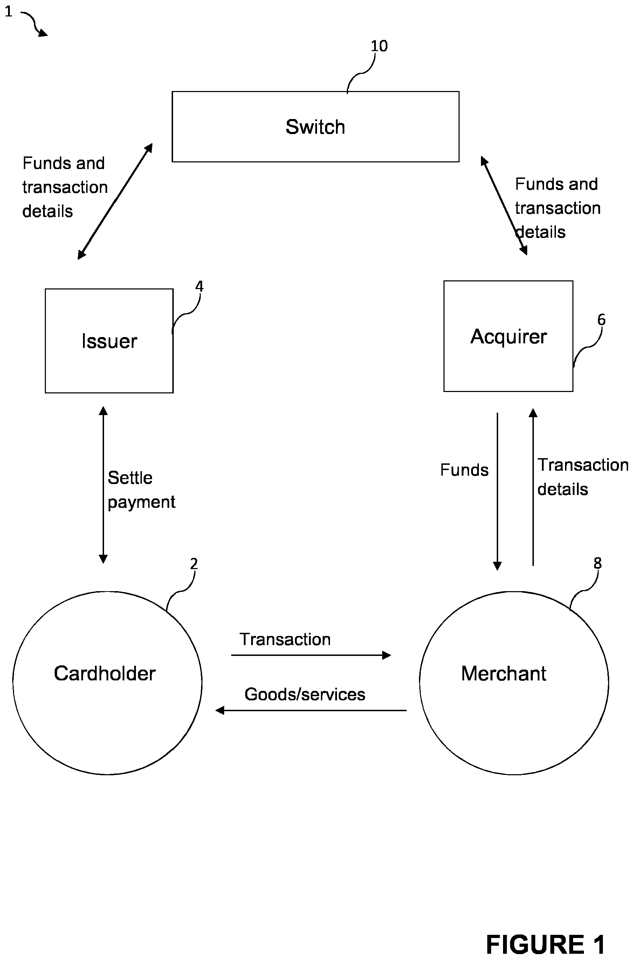

**Figure 1** shows a schematic block diagram illustrating the entities present in a general four-party transaction (card) scheme 1 and the interactions that occur between the entities.

Card schemes are payment networks linked to payment cards (for example, debit or credit cards), and any bank or eligible financial institution (such as a building society or mortgage loan company) is able to become a member of a particular card scheme. Membership of a card scheme entitles the member (depending on their function) to issue or acquire cards operating on the network of that card scheme. Card schemes are usually based on one of two models - a three-party (or closed) model, which is used by American Express for example, and a four-party (or open) model, which is used by Visa and Mastercard.

For the purposes of this document, we will focus on the latter four-party model as the basis for the transaction network of the present disclosure. Such a scheme does not limit the number of entities that may join the scheme, and allows multiple different issuers or acquirers to join the scheme as long as they meet the requirements of the scheme.

As the name suggests, the four-party model comprises four separate entity types taking part in each transaction: cardholder 2, issuer 4, acquirer 6 and merchant 8. In this scheme, the cardholder 2 (also sometimes referred to as the consumer) is the purchaser of goods or services from the merchant 8. The issuer 4 is associated with the cardholder 2 (i.e. they are the bank or other financial entity that *issued* the card to the cardholder), whilst the acquirer 6 is associated with the merchant 8 and provides card processing services to the merchant 8. The issuer 4 and acquirer 6 are members of the scheme 1, which sets the rules of the transactions that may occur and provides a central 'switch' 10 via which interactions between the issuer 4 and acquirer 6 are routed. The presence of the switch 10 means that merchants 8 associated with one particular bank (acquirer) can accept payments from cardholders associated with many different banks (multiple different issuers), without the acquirers 6 and issuers 4 having to enter into a bilateral relationship.

A typical transaction between the entities in the four-party scheme will now be described. The transaction is generally divided into two main stages - authorisation and settlement. The cardholder 2 makes a purchase from the merchant 8 using their payment card, and details of the card and the transaction are captured and sent (via the acquirer 6 and the switch 10) to the issuer 4 to authorise the transaction. If the transaction is considered abnormal or potentially fraudulent by the issuer 4, then the cardholder 2 may be required to verify their identity and details of the transaction before the transaction is authorised.

After the transaction between the cardholder 2 and the merchant 8 is completed, the merchant 8 transmits the transaction details to the acquirer 6 for settlement. The acquirer 6 then routes the transaction details to the relevant issuer 4 via the switch 10. Upon receipt of these transaction details, the issuer 4 provides the settlement funds to the switch 10, which in turn forwards these funds to the merchant 8 via the acquirer 6. Separately, the issuer 4 and the cardholder 2 settle the payment amount between them. In return for these services, the merchant 8 pays a service fee to the acquirer 6 for each transaction that is routed through the scheme 1, and the acquirer 6 pays an 'interchange fee' to the issuer 4 in return for the settlement of funds.

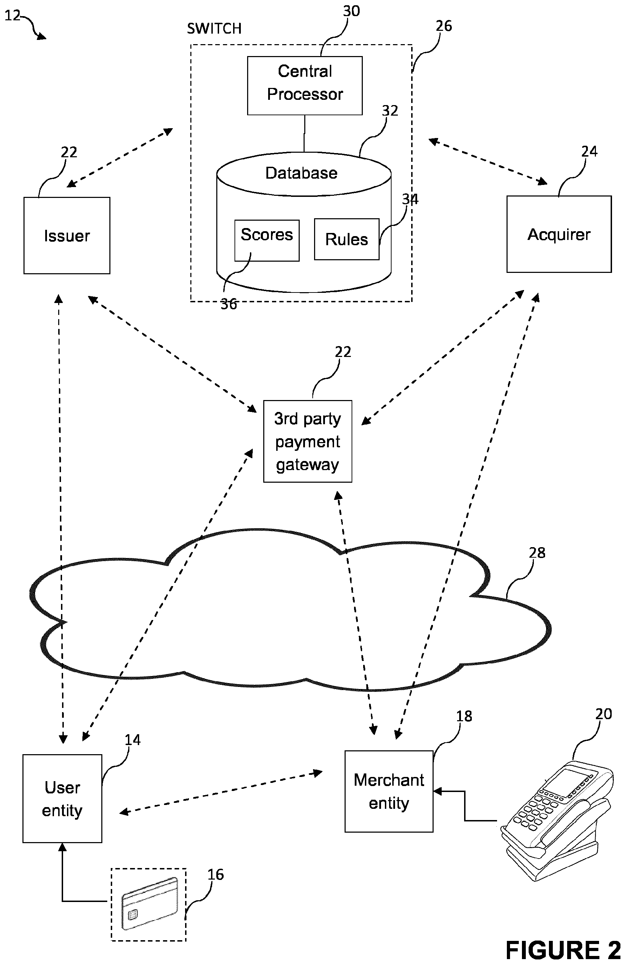

**Figure 2** shows a schematic diagram of a transaction network 12 comprising entities operating within or under a card scheme 1 that utilises the four-party model that was shown in Figure 1. This transaction network 12 is suitable for implementing a method of mapping and graphically representing entity interactions according to an aspect of the present disclosure.

The illustrated transaction network 12 comprises a user entity 14 having a payment card 16 associated with it, and a merchant entity 18 having a POS terminal 20 or other payment mechanism associated with it for on-the-spot purchases. The user entity 14 and merchant entity 18 may conduct their transactions with the user entity 14 and their card 16 being physically present at the location of the merchant entity 18. Alternatively, the user 14 and merchant 18 entities may conduct their transactions online, and the transaction network 12 therefore comprises a third party online gateway 22 with which the two parties may communicate. The transaction network 12 comprises an issuer 24, which is associated with the user entity 14 and their card 16 (as the issuer was the bank or other financial entity that issued the card to the user), and an acquirer 24 which provides card processing services to the merchant 18. The transaction network 12 also comprises a switch 26 via which interactions between issuer 22 and acquirer 24 are routed. The transaction network 12 further comprises a communication network 28 (for example, via the public internet) or other communication means (such as a dedicated secure communication channel) via which all entities within the network 12 are able to communicate with one another.

It will be appreciated that a typical transaction network 12 operating within a card scheme 1 such as that implemented by MasterCard usually comprises multiple user entities 14 (each associated with one or more different issuers 22), and multiple merchant entities 18 (each associated with a one or more different acquirers 24). However, for simplicity, only one of each type of entity is illustrated in the figure. In addition, it is noted that other entities may also be involved in the transaction network 12, such as intermediaries that process transactions on behalf of the merchant entity 18 (for example, brands that own multiple different merchant chains), however for simplicity these have also not been illustrated in this figure.

The switch 26 comprises a central processor 30 in operative communication with a database 32. The central processor 30 is arranged to analyse and assess, in real time, each of the transactions that are carried out between the user 14 and merchant entities 18, as well as their subsequent interactions and transactions with their respective issuers 22 and acquirers 24, and to determine (among other characteristics) the likelihood of a particular transaction being fraudulent. A variety of transaction characteristics are assessed by the central processor 30 in order to quantify this likelihood - for example, the IP address of the computer at which the transaction was carried out (in the event that it was an online transaction), the time of day and the payment amount associated with the transaction. This assessment is carried out based on a set of rules or conditions 34, which are stored in the database 32, and a final 'fraud score' is calculated which corresponds to the likelihood or probability of that particular transaction being fraudulent in nature. In general, fraud scores range between 0 and 1, and the higher the calculated fraud score, the greater the likelihood of the transaction being fraudulent. The resultant fraud scores 36 are stored in the database 32, alongside details of the corresponding transaction; the fraud scores 36 may also be provided to the issuers 22 of the corresponding payment card 16. The issuers 22 then can base their decision of whether to accept or decline a particular transaction on the provided fraud score, and can independently contact the relevant entity if necessary to ascertain if a particular transaction was in fact fraudulent.

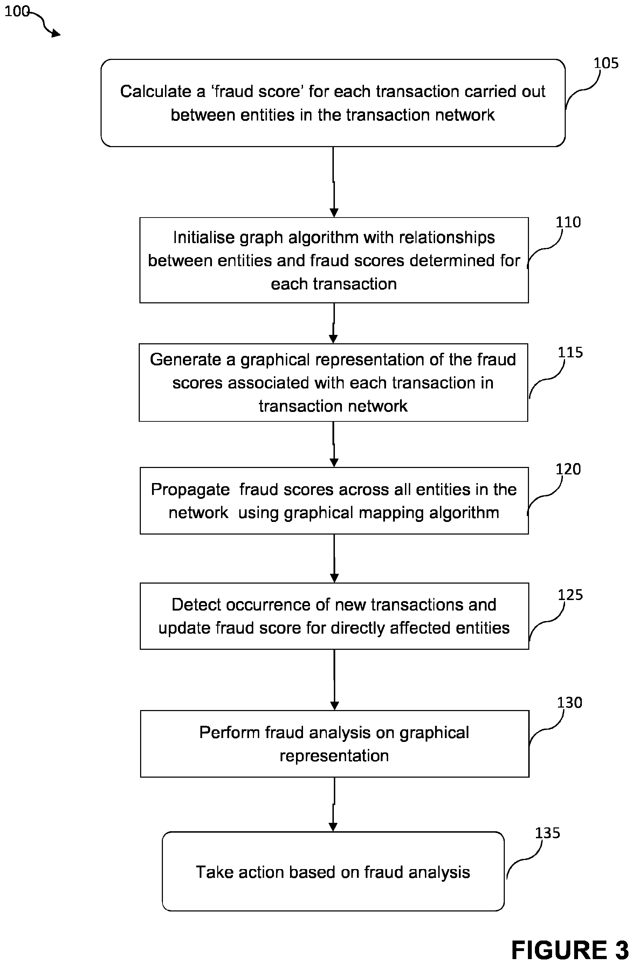

**Figure 3** shows a flow diagram illustrating a method 40 of mapping interactions between entities in the transaction network 12 of Figure 2, according to an aspect of the present disclosure.

This method 40 is carried out by the switch 26 of Figure 2, and uses as its starting point the transaction fraud scores 36 that were determined for each individual transaction, and were stored in the database 32 of the switch 26, as described earlier.

The following steps in the method 100 involve the generation (and subsequent update) of a graphical representation of the transaction network 12 utilising the card scheme 1. In order to aid the understanding of this part of the method, a brief background on graph theory and its applications will now be provided.

Graph theory involves the study and modelling of pairwise relations between different objects or entities. In this context, a graph comprises a plurality of 'nodes' (representing each of the entities), with each pair of nodes being connected to one another via lines or 'edges' (which represent the interactions between each pair of the entities). It is possible for a graph structure to be extended and increased in complexity by assigning a particular weighting to each node or to each edge in the graph, thereby allowing for a more accurate representation of graph structures in which pairwise relationships or connections can be quantified.

Graph theory is used to model a wide range of relationships and processes across a variety of different disciplines - applications of graph theory range from computational science (for example, modelling computational flows in communication networks), to chemistry (for example, modelling atomic and molecular topology), to epidemiology (for example, modelling the spread of diseases).

In the method 100 according to an aspect of the present disclosure, graph theory is used as the basis for generation of a graphical representation of the transaction network. A first part of the method is to calculate at step 105 a fraud score for each transaction carried out between entities in the transaction network 12, initialise at step 110 the graph algorithm with relationships between entities and fraud scores determined for each transactions, and to create at step 115 an initial graphical representation based on the existing properties of the transaction network 12. In particular, the following pieces of information are used to create the graph:
(i) each of the nodes of the graphical representation is defined to be one of the entities within the transaction network (for example, an issuer 22a, 22b, 22c, a user entity 14a, 14b, 14c, a merchant 18a, 18b or a user entity's card 16a, 16b, 16c);
(ii) transactions or interactions between pairs of entities are used to define the edges between the respective nodes;
(iii) the fraud score associated with each transaction is used as an initial numerical weight of the corresponding edge.

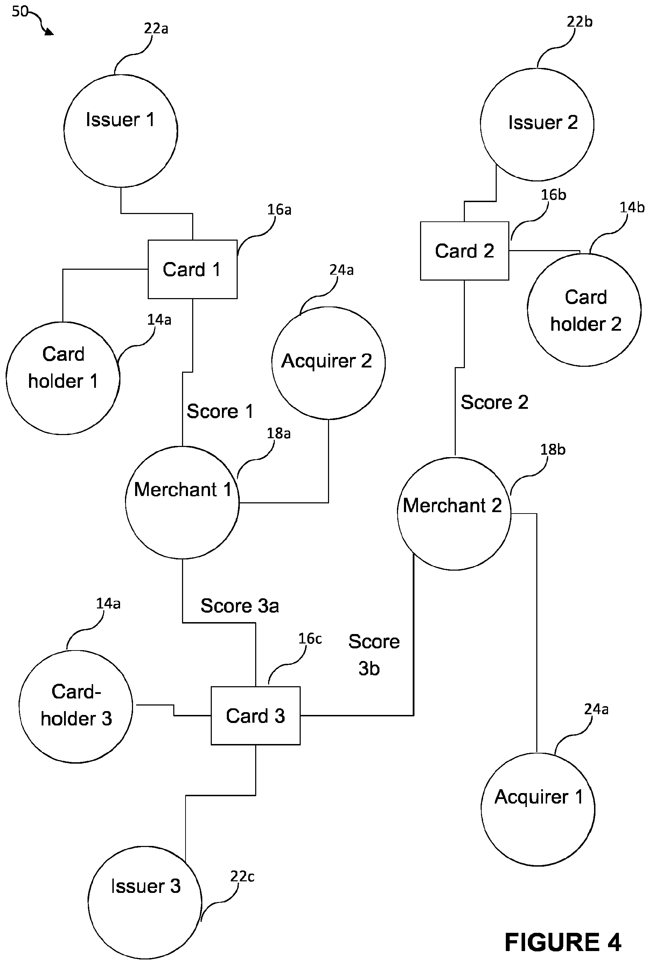

An example of the resultant graphical representation 50 may be seen in Figure 4. It should be noted that the nodes generated in this initial representation are all of the same size, and only those edges which represent a transaction (i.e. the edges between a user entity's card and a merchant) are assigned a numerical weighting in the form of a fraud score (between 0 and 1) - these are represented in the figure by Scores 1, 2, 3 and 3a. In some instances, where there have been a multitude of transactions involving the same entities (for example, the same card has been used multiple times in transactions with the same merchant over a given period of time), the fraud score that is applied to the edge between those entities may be an average of all (or a subset of) previous/historical fraud scores.

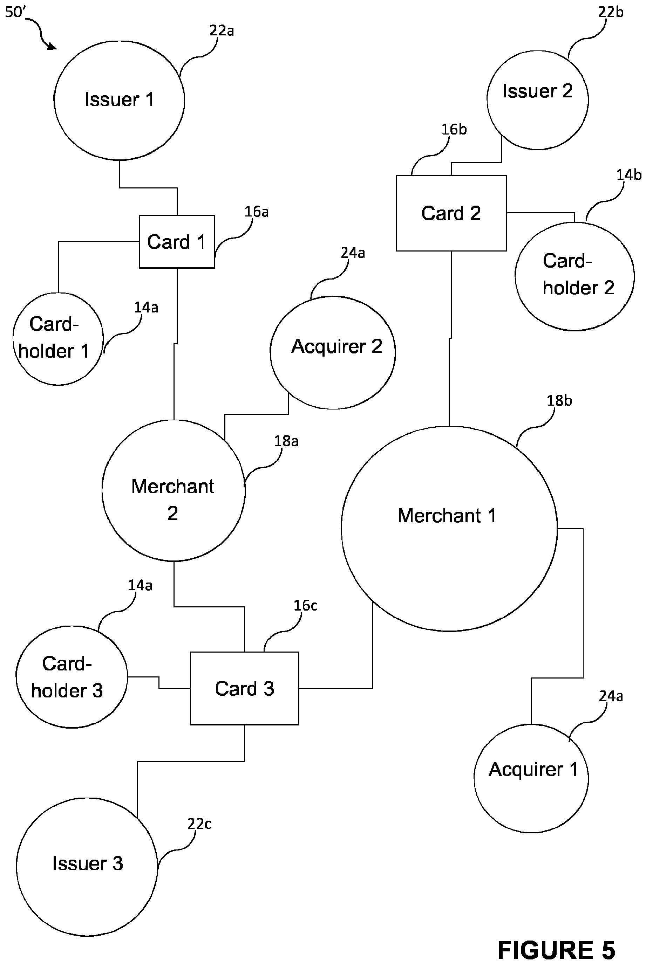

The second part of this method is to execute a graphical mapping algorithm (for example, the Page Rank algorithm used by the Google search engine to rank websites in their search results) on the resulting graph (or graphical representation).The effect of executing this algorithm is to iteratively propagate at step 120 the influence of the existing fraud scores on individual transactions throughout the entire network, effectively assigning what will henceforth be referred to as a 'FraudRank score' to every node in the graph, even those nodes having no edges that correspond to a payment transaction. Specifically, for any given node, the graphical mapping algorithm ascertains the fraud scores associated with the edges connected to the selected node, and based on the cumulative effect of all of the fraud scores (for example by a simple averaging of the fraud scores, or by using a weighting based on the relative importance of each fraud score), assigns a numerical weighting (i.e. the 'FraudRank') to that node. Figure 5 depicts this newly enhanced graph, where the size of each node now represents the FraudRank score associated with that node.

Once the underlying structure of the graphical representation has been generated, the representation may subsequently be iteratively updated or refreshed at intervals in step 125 to take into account recent transactions and interactions that have occurred since the representation was generated (or since the last refresh).

During a typical refresh or update, the central processor 30 identifies any new transactions or events that have occurred in the time since the last update. In some instances, this may be carried out by noting the date/time stamp when the most recent update was made and extracting (from the database 32) details of all of the transactions that have date/time stamps after that of the chosen update time. The graph structure is then updated in step 125 to reflect these new transactions. This update may be carried out in one of two ways: (a) if a transaction occurs between entirely new entities or between a new entity pairing not seen in the previous iteration, new edges and new nodes (if required) are added and the corresponding fraud score is used to weight the newly-generated edge; (b) if a repeat transaction occurs between a known pairing of entities (for which a fraud score had been determined in a previous iteration), the weighting for that edge will be updated to include the influence of the fraud score associated with this new transaction. In practice, this update will be more sophisticated, but in general the method employed will involve the newly-obtained or calculated fraud score being combined with the current fraud score such that the resultant fraud score value is still between 0 and 1 (for example, by a simple average of the two numbers, or by assigning a different fractional weighting to each fraud score based on prior knowledge of the importance of each score). The graphical mapping algorithm is then re-run and the nodes of the graphical representation are thereby updated (as described previously) with their newly calculated FraudRank scores.

After the graphical representation 50 has been updated, an analysis may be carried out in step 130 using the graphical representation to detect the presence of any instances of potentially serious fraudulent activity - i.e. nodes with very high FraudRank values. The appropriate action can then be taken at step 135 in response to the detection of fraudulent activity - a more detailed discussion of such actions will be provided with reference to Figure 5.

As there may be millions of transactions carried out daily within a single card scheme 1 (all of which will be routed via the switch 26 for that card scheme), the sheer number of new transactions that will need to be processed in order to update the graphical representation is enormous. Running the graph algorithm to take account of these changes will therefore be very computationally expensive, and as a result, a refresh or update of the graphical representation will only be carried out at fairly large intervals. For example, it is envisioned that updates to the graphical representation would be carried out only once a day or even once a week, although it will be appreciated that given sufficient computing power, the updates could be carried out more frequently if necessary. Alternatively or additionally, only a specific portion of interest of the graphical representation could be updated at more regular intervals. For example, only a subset of entities which appear to be prone to fraudulent activity could be monitored more frequently.

Turning now to **Figure 5****,** an example of a graphical representation 50' of entities in a transaction network, generated using the method described earlier, may be seen. This graphical representation shows three cardholders 14a, 14b, 14c (previously referred to as user entities), each of which is associated with and linked to their own payment card 16a, 16b, 16c. The payment cards themselves are then linked to all of the entities with which they have interacted during one or more payment transactions. For example, Card 3 (held by Cardholder 3) is linked to two separate merchants 18a, 18b as Cardholder 3 has used the card during separate purchases with Merchant 1 and Merchant 2; Card 3 is also linked to Issuer 3 which is the entity that issued this card initially. The previously-calculated fraud scores associated with each transaction are used to weight the links between each pair of entities in the graphical representation.

An additional feature of the graphical representation 50' is that the size of each node is proportional to the numerical weighting (based on the fraud score) associated with the edges that are joined to that node. If the calculated fraud score for a particular transaction is higher (implying a greater likelihood of a particular transaction being fraudulent), the corresponding nodes linked to that transaction will appear larger in the graphical representation. The effect of the numerical weighting will also be propagated to nodes with secondary links to the affected node (i.e. those nodes that are indirectly linked to the affected node via one or more intermediate nodes). As may be seen in Figure 5, the node corresponding to Merchant 1 is very large, implying that there is a high probability of fraudulent activity being carried out there (for example, the merchant's POS terminal may have been compromised). The nodes representing Card 2, Card 3 and Acquirer 1 are also correspondingly larger due to their direct association with the affected node of Merchant 1. The nodes representing Cardholders 2 and 3 are also slightly larger than a normal uncompromised node (as represented by Cardholder 1), reflecting their indirect association with Merchant 1 via their payment cards.

Such a graphical representation is advantageous as it allows a user analysing the graphical representation (which may comprise thousands of individual nodes and edges) to easily detect particular nodes that are associated with a high likelihood of fraudulent activity. Furthermore, once a potential breach of security has been detected at an entity, it is relatively simple to ascertain which other related entities will be affected, by tracing the links between pairs of interacting entities. For example, if a particular merchant's POS terminal is compromised, or a particular cardholder's payment card is stolen and used to commit fraud, this activity will be easily pinpointed by a user analysing the graphical representation. The appropriate action can then be taken in response to the detection of fraudulent activity. For example, in the scenario described above where the merchant 18b has been compromised, the merchant 18b (and their associated acquirer 24a) can be contacted to apprise them of the situation. The issuers 22b, 22c of all of the cards 16b, 16c that have been used at that merchant 18b are contacted to inform them of the identity of those transactions that are believed to be fraudulent. Similarly, if a particular user's card is compromised, the relevant issuer can be contacted to inform them that a card is being or will be used fraudulently, and to identify the exact transactions which are fraudulent, to ensure that the cardholder is not wrongfully charged.

As the person skilled in the art will appreciate, modifications and variations to the above embodiments may be provided, and further embodiments may be developed, without departing from the spirit and scope of the disclosure.

## Claims

1. A computer implemented method for mapping and handling interactions between a plurality of entities in a network, the method comprising:
calculating an initial trust value between pairs of entities based on data relating to previous interactions between those entities, the trust value indicating the degree of trust associated with the interaction;
determining, for each entity in the network in turn, one or more pair-wise relationships between a selected entity and any of the other entities in the network with which the selected entity has interacted;
generating data corresponding to a graphical representation of all of the entities in the network based on the relationships determined for each pair of entities, and the calculated trust value associated with the interaction between each pair of entities;
iteratively propagating, using a graphical mapping algorithm, the initial trust values to all entities in the graphical representation so as to calculate a current trust value associated with each entity; and
analysing the calculated current trust values for each entity to determine an appropriate action to be taken in dependence on the results of the analysis.

2. The method of claim 1, further comprising:
re-calculating, in response to a pre-determined trigger condition, the initial trust value for each interaction using an iterative method; and
updating the data corresponding to the graphical representation and the current trust values based on the re-calculated initial trust values.

3. The method of claim 2, wherein the pre-determined trigger condition corresponds to a pre-defined interval of time.

4. The method of any preceding claim, further comprising identifying, via the analysis of the current trust values, the occurrence of a specific event; and taking action in dependence on the event occurrence.

5. The method of claim 4, wherein the event is an instance of fraudulent activity, and the initial trust value is a measure of the probability of fraud for interactions between the corresponding pair of entities.

6. The method of any preceding claim, wherein the network is a transaction network and the initial trust value is a measure of the probability of an interaction between a pair of entities being fraudulent.

7. The method of claim 6, wherein the initial trust value is only calculated between pairs of entities which carry out direct transaction interactions.

8. The method of claim 6 or claim 7, wherein each of the entities is one of the following:
issuer, acquirer, merchant, card holder, card.

9. A system for mapping and handling interactions between a plurality of entities in a network, the system comprising:
a computation module arranged to calculate an initial trust value between pairs of entities based on previous interactions between those entities, the trust value indicating the degree of trust associated with the interaction;
a determining module arranged to determine for each entity in the network in turn, one or more pair-wise relationships between a selected entity and any of the other entities in the network with which the selected entity has interacted;
a generator module arranged to generate data corresponding to a graphical representation of all of the entities in the network based on the relationships determined for each pair of entities, and the calculated trust value associated with the interaction between each pair of entities;
a propagator module arranged to iteratively propagating, using a graphical mapping algorithm, the initial trust values to all entities in the data corresponding to the graphical representation so as to calculate a current trust value associated with each entity; and
an analysis module arranged to analyse the calculated current trust values for each entity to determine an appropriate action to be taken in dependence on the results of the analysis.

10. A computer program product comprising instructions which, when the program is executed by a computer, cause the computer to carry out the steps of the method of any one of claims 1 to 8.

11. A computer-readable storage medium comprising instructions which, when executed by a computer, cause the computer to carry out the steps of the method of any one of claims 1 to 8.
